# EUROPEAN PATENT SPECIFICATION

(11) **EP 1 232 219 B1**
(45) Date of publication and mention of the grant of the patent: **16.03.2005**
(21) Application number: 00960877.9
(22) Date of filing: 22.09.2000
(51) Int. Cl.: C09D 4/06, C08F 283/12, C08F 275/00, C08G 77/442, C08J 7/16

(54) **COATING MATERIALS**
ÜBERZUGSMITTEL
MATERIAUX DE REVETEMENT

(30) Priority: 07.10.1999 GB 9923747
(43) Date of publication of application: 21.08.2002
(73) Proprietor: THE WELDING INSTITUTE, Great Abington, Cambridge CB1 6AL (GB)
(72) Inventor: TAYLOR, Alan The Welding Institute, Cambridge CB1 6AL (GB)
(74) Representative: Hucker, Charlotte Jane
(86) International application number: PCT/GB2000/003643
(87) International publication number: WO 2001/025343

(56) References cited:
- EP-A- 0 851 009
- EP-A- 0 918 061
- US-A- 4 921 881
- US-A- 5 385 988
- US-A- 5 391 647
- US-A- 5 424 375
- US-A- 5 470 910
- KADDAMI H ET AL: "DIFFERENT SOLVENT FREE SYNTHETIC ROUTES TO ORGANIC/INORGANIC HYBRID MATERIALS" MATERIALS RESEARCH SOCIETY SYMPOSIUM PROCEEDINGS. VOL. 576,US,WARRENDALE, PA: MRS, vol. 576, 5 April 1999 (1999-04-05), pages 51-61, XP000897890 ISBN: 1-55899-483-1

## Description

### Field of the Invention

The present invention relates to a process for providing a protective coating on a substrate so as to impart to the substrate resistance to mechanical and chemical damage, while at the same time maintaining excellent optical properties.

### Background of the Invention

Polymer-based materials are routinely used as alternatives to glass in many situations where the weight, tendency to shatter, or expense of glass contraindicates its use. In turn, polymeric materials such as acrylic and polycarbonates have inherent drawbacks, particularly with regard to poor abrasion-resistance, but also with regard to poor resistance to degradation by UV light, and poor corrosion resistance on exposure to organic solvents.

In order to address these problems, protective coatings have been applied on to polymeric materials. Silica-based materials have been widely used for this purpose, typically made by colloidal sol-gel techniques, in which silica particles coalesce and ultimately gel to form an extensive silica network. However, these materials offer only limited protection. Furthermore, due to the inert nature of these materials, and in particular their low levels of cross-linking, there is little scope for further improvement in either their performance or their versatility.

Coatings provided by way of polymeric sol-gel techniques have higher levels of cross-linking, and therefore significantly better mechanical and chemical resistance than the conventional particulate-based materials. Typically, in polymeric sol-gel techniques precursor molecules, such as alkoxides, are hydrolysed in a mixture of water and solvent, and proceed to undergo a transition from a sol to a gel state by polycondensation. Unfortunately, however, removal of the solvent after gelation, by forced drying or by natural evaporation, introduces stresses within the gel structure, which at coating thicknesses greater than around 1.5 µm tends to result in cracking, and a loss in performance. One approach to coping with this restriction is to apply multiple thin coatings, usually with a practical limit of 20 to 30 coats. However, this is cumbersome, and increases production costs, and also results in relatively rigid coatings.

Where coatings thicker than 1.5 µm are needed composite inorganic/organic materials have been employed. These materials are typically prepared by incorporating a polymerisable organic component into a colloidal sol-gel system, and are generically termed ORMOCERs® (Organically-Modified Ceramics). ORMOCERs can be thought of as comprising a network of silica (or other metal oxide) particles within an organic polymer network. There is little interpenetration between the two networks.

While materials of this type form relatively hard, abrasion-resistant coatings, at oxide loadings of around 25% by weight and above, where optimum hardness is achieved, transparency problems have been encountered. Furthermore, until relatively recently most of these materials have tended to cure at temperatures of around 200°C, or higher, rendering them unsuitable for application to substrates having low softening points, e.g. thermoplastic substrates having softening points of 150°C or lower.

US-A-4921881 discloses scratch-resistant coatings consisting of
(A) 82 to 64 weight %of a cocondensate prepared from (A1) 90 to 65 weight % vinyl tri(m)ethoxysilane and (A2) 10 to 35 weight % of tetra(m)ethoxysilane;
(B) 9 to 27 weight % of a reactive diluent comprising at least 2 vinyl or (meth)acrylic groups; and
(C) 0 to 9 weight % of a photoinitiator.

US-A-5470910 discloses composite materials containing nanoscaled particles in a polymer matrix. The composite materials are made by reacting a compound selected from Groups 6 to 15 of the Periodic Table and the lanthanides, dissolved in an organic solvent, with a precipitating agent in the presence of a bifunctional compound which can be converted through polymerisation or polycondensation into an organic or inorganic network. The resulting stabilised sol is mixed with a compound which can be polymerised or cured into a polymer, and a polymerisation initiator, and is then cured.

EP-A-0851009 discloses an anti-fouling resinous composition comprising a silica dispersed oligomer solution of an organosilane, an acrylic resin, a straight-chain polysiloxane diol, a silanol group-containing polyorganosiloxane and a curing catalyst, and an article coated therewith.

US-A-5424375 discloses a polymeric material comprising a polysiloxane network (1) formed from at least one polydimethylsiloxane and a crosslinking agent, and an acrylic network (2) formed from at least one (meth)acrylic monomer containing no hydrophillic functional group and a radical polymerisation initiator. The polymeric material is formed from a polymerisation mixture containing all the above-defined constituents.

The development of low temperature coating materials which do not suffer from the draw-backs of the hitherto used silica-based materials is, therefore, very much in demand.

### Summary of the Invention

According to a first aspect of the present invention, a process for providing a protective coating on a substrate is defined in claim 1.

According to a second aspect of the present invention, a coated substrate is obtainable by the process defined in claim 1.

According to a third aspect of the present invention, a coating composition is defined in claim 19.

According to a fourth aspect of the present invention, a process for bonding together at least two articles is defined in claim 20.

The coatings of the present invention are formed of composite materials which embody a more intimate mixture of inorganic and organic components than has been achieved in the prior art. The high levels of transparency that can be achieved supports interpenetration of the inorganic and organic polymer networks on the nanometre scale. It is believed that this level of intimacy of mixing of inorganic and organic components may be responsible for the excellent performance properties of the coatings of the present invention.

More specifically, the coating materials of the present invention may be formulated to have excellent abrasion resistance, hardness and flexibility, and lack the tendency to crack, i.e. they form continuous coatings. They may also be formulated to resist attack by chemicals. Furthermore, the coating materials may be formulated to cure at relatively low temperature, rendering them particularly suitable for coating polymeric materials having relatively low melting points or softening temperatures.

### Description of the Invention

The process of the present invention is a modified polymeric sol-gel process. An important aspect of the process, and in particular to achieve the desired interpenetration of inorganic and organic polymer networks, is the formation of an homogeneous liquid mixture of inorganic monomers and polymerisable organic species prior to substantial completion of the inorganic polycondensation reaction to form an inorganic polymer, or gel. In the context of this Application, an homogeneous mixture is one which, when observed by the human eye, is essentially uniform and not partitioned into separate phases. Therefore, while the inorganic and organic phases will exist on the nanoscale, they are not apparent on a larger scale.

The present invention utilises at least two different types of inorganic monomer. Each inorganic monomer contributes to the overall inorganic network. It is theorised that one of the inorganic monomers is primarily responsible for formation of the bulk of the inorganic network, whereas the other inorganic monomer, while contributing to that network, may also act to promote compatibility between the inorganic and organic networks, or act in some way to engage those networks.

Polymerisation of the inorganic monomers is initiated by hydrolysis of hydrolysable monomer precursors, and subsequent polycondensation of the resulting monomers. In the context of the present Application, by an "hydrolysable inorganic monomer precursor", we mean an inorganic molecule which is activated by hydrolysis to a polymerisable inorganic monomer, which, on polycondensation with similar hydrolysed monomers, forms a sol (inorganic oligomers or colloidal solution), and ultimately an inorganic polymer or gel.

The precursors for the first inorganic monomers, i.e. the primary inorganic network-forming species, contain at least two hydrolysable groups, and preferably at least three hydrolysable groups, depending of course on the valency of the inorganic element contained therein. The precursors for the second inorganic monomers must include at least one non-hydrolysable group.

The term "inorganic" is used in the context of the present Application to denote the presence in the precursor molecule of an inorganic element, typically one giving rise to an oxide ceramic material, e.g. silicon, aluminium, titanium, zirconium, yttrium, or other transition metals.

The inorganic monomer precursors for use in the present invention may be any of those conventionally used in polymeric sol-gel techniques. Examples of suitable inorganic monomer precursors include alkoxides, substituted alkoxides, having one or more non-hydrolysable groups, e.g. alkyl-substituted alkoxides, nitrates, acetates, halides and mixtures thereof.

The preferred inorganic monomer precursors are alkoxides, and the most preferred are alkoxysilanes. Although alkoxides of any of the above-mentioned inorganic elements may be used, mixtures thereof, and mixed inorganic alkoxides, for instance mixed silica-titania alkoxides to name but one. Indeed, such mixed inorganic networks may give rise to benefits suited to particular applications, as will be described in more detail below.

Suitable alkoxysilanes for use in the present invention include those having the following formula:

SiR¹ ₐR² _{b}(OR³)_{c}

where R¹ and R² are hydrocarbon radicals having 1 to 10 carbon atoms which may contain an ether linkage or ester linkage or an unsaturated carbon-carbon bond, R³ is a hydrogen atom or a hydrocarbon radical having 1 to 10 carbons atoms, a and b are integers in the range 1 to 3, and c is equal to (4-a-b) and represents an integer in the range 1 to 4.

Generally, it is preferred that the alkoxysilanes used as the primary inorganic network-forming species comprises at least three alkoxy groups, and preferably four such groups. A particularly preferred material is tetraethyoxysilane (TEOS).

The alkoxysilanes used as the secondary inorganic network-forming species, otherwise referred to as the "compatibilisers", can also be selected from materials having the above general formula, provided that their pendant groups, or ligands, are different to those of the primary inorganic network-forming species and they include at least one non-hydrolysable group. The non-hydrolysable groups can vary widely from relatively simple hydrocarbon groups, for instance alkyl groups, to groups which are difunctional or multifunctional in nature, and which can give rise to three-dimensional networks. Preferred substituted alkoxides are those substituted with an ethylenically-unsaturated group or an epoxy group. Suitable examples include vinyltriethoxysilane (VTEOS), 3-(trimethoxysilyl)propyl methacrylate (MPTMA) and 3-(glycidyoxypropyltrimethoxysilane) (GPTS).

Another option to using inorganic monomer precursors which differ in the nature of their pendant groups, is to use inorganic monomer precursors containing different inorganic elements, although it remains important for optimum results that one of those groups of precursors contains a non-hydrolysable bond for compatibility with the organic component.

Yet another option is to use inorganic monomer precursors which differ both in their inorganic elements and in the organic groups bound thereto.

The ratio of the different inorganic monomer precursors can vary over a wide range, and is typically selected according to the nature of the monomer precursors and the properties required in the final composite material. It has been found, however, that by selecting a ratio within a certain range coatings can be achieved having good clarity, abrasion resistance and resistance to cracking, over a wide range of process parameters. For other ratios, it may be necessary to maintain a tighter control over the process parameters in order to achieve all the above properties in combination. However, in some cases this may not be practically possible in an industrial environment, for instance if prolonged curing of the coating is necessary, in order to achieve the necessary hardness or abrasion resistance.

The preferred ratios of inorganic monomer precursors, expressed as primary network-forming species: total of primary and secondary network-forming species, lie in the range 0.75 to 9, with the more preferred ratios lying in the range 0. 78 to 0.88 and the most preferred in the range 0.8 to 0.86. These ratios are particularly suitable when the primary network-forming species is a tetraalkoxysilane such as tetraethyoxysilane (TECS) and the secondary network -forming species is a single-substituted alkoxide such as 3-(trimethaxysilyl)propyl methacrylate (MpTMA).

In order to hydrolyse the inorganic monomer precursors, water is either added to the inorganic monomer precursors, or is synthesised *in situ*. Typically, hydrolysis of the inorganic monomer precursors is achieved by formation of an homogeneous mixture with water and, optionally, an organic solvent. Alternatively, the precursors may be dissolved in an organic solvent and water added to the resulting solution in a controlled manner, as is conventional in sol-gel techniques, to avoid development of agglomerations of partially-hydrolysed molecules. Suitable organic solvents include any of those conventionally used in polymeric sol-gel techniques. Typically, the solvent will be a low boiling point organic liquid, for instance having a boiling point lower than 100°C, and will usually be an alcohol.

The solvent acts to improve the miscibility or compatibility of the inorganic and organic phases. An alternative to using a solvent would be to use a liquid which is not a solvent for the inorganic or organic monomers, and include within the system one or more materials to improve the miscibility of the different types of monomer. Examples of such materials include, but are not limited to, anionic, cationic and non-ionic surfactants, and fluorine-containing surfactants. With selection of an appropriate material, it may be possible to avoid the use of organic solvents altogether, and simply use water to suspend the inorganic and organic monomers. This would be particularly desirable in view of current environmental pressures on industry to reduce emissions of volatile organic compounds (VOC's).

If, as is less preferred, water is to be synthesised *in situ* in the reaction mixture, this can be achieved, for example, by including an alcohol in the reaction mixture and then adding a weak acid, for example acetic acid, again in a controlled manner.

It is preferred to use a catalyst to initiate hydrolysis of the inorganic monomer precursors. Suitable catalysts include any of those conventionally used in polymeric sol-gel techniques, for instance mineral acids such as hydrochloric acid, sulphuric acid and nitric acid, with hydrochloric acid being the most preferred. Only a small amount of acid is needed for this purpose, for instance as little as 1 x 10⁻⁴ moles acid per mole of alkoxide, generally at least 1 x 10⁻³ moles acid per mole of alkoxide. Although, depending upon the nature of the inorganic monomer precursors, hydrolysis may proceed spontaneously.

The amount of water used in the process of the invention should generally be sufficient to hydrolyse all the inorganic monomer precursors, and will, therefore, depend upon the nature of those precursors, and in particular the number of hydrolysable bonds that they contain. Because water is produced during the polycondensation reaction, it will be not normally be required to use a 1:1 water:hydrolysable bond molar ratio, although such ratios may be used if desired. For instance, where the inorganic monomer precursors are tetraalkoxysilanes, having four hydrolysable bonds, preferably the molar ratio of water:hydrolysable bonds will approach 2:4, such that the molar ratio of water:tetraalkoxysilanes will approach 2:1. Higher amounts of water may be used, but as unreacted water must be removed prior to formation of the final composite, this is less preferred.

Additional water may be added after initial hydrolysis of the inorganic monomer precursors, and also on mixing with the polymerisable organic species, although the latter is less preferred.

Hrydrolysis of the different hydrolysable inorganic monomer precursors is conducted separately from one another, and the resulting sols that are formed are then mixed together to form an homogeneous mixed sol. Separate hydrolysis of the different inorganic monomer precursors allows greater control of the sol-gel process, and gives more consistent results in terms of coating properties. It is preferred to age each of the different Dole prior to mixing them together, preferably isolated from the atmosphere e.g. in a sealed container, to enhance storage life. Typically, each sol should be aged for a period of from 10 minutes up to 24 hours, although shorter or longer ageing periods may be appropriate depending upon the nature of the inorganic monomers. Preferably, however, each sol is allowed to age for a period of from 30 minutes to 4 hours. The aged sols are then mixed together, taking care to ensure that the resultant mixture is homogeneous.

It is preferred that an initial ratio of 0.5:1 water:hydrolysable bonds be used for hydrolysis of each monomer precursor, and that on mixing the hydrolysed monomer precursors further water is added up to a ratio of 1:1, or possibly higher, for instance up to 1.5:1.

After initiation of hydrolysis of the inorganic monomer precursors, inorganic polymerisation proceeds spontaneously, typically over extended periods of time e.g. up to several months or significantly longer, for instance for a few years. The sol ages, and ultimately, when inorganic polymerisation is substantially complete, forms a gel or inorganic polymer. The ageing process may, if desired, be catalysed by addition of a small quantity of mineral acid, and may be accelerated by raising the temperature to more than 25°C, typically to within the range 30°C to 100°C. Higher temperature may be used, but may be limited by the nature of the organic monomer, and/or, if the composite is to be used as a coating, the nature of the substrate to be coated.

In some cases, however, slow polymerisation may be preferred, for instance to enhance the shelf-life of the product. This is particularly important in the context of coatings, which must remain relatively fluid for application to a substrate. Then, on application to the substrate, both inorganic and organic polymerisation may be taken substantially to completion.

The process of the present invention requires formation of an homogeneous mixture comprising an inorganic sol and polymerisable organic species. In the context of the present Application, by "polymerisable organic species", we mean organic monomers and oligomers capable of undergoing polymerisation to form an organic polymer or copolymer.

The polymerisable organic species are only added to the inorganic monomer precursors after initiating hydrolysis of those precursors, when at least an initial sol has been formed. Preferably, the sol is allowed to age, for instance by leaving to stand, or by exposing to elevated temperature, prior to addition of the polymerisable organic species. However, it is essential that the sol remains in liquid or solution form on addition of the polymerisable organic species, in order to allow homogeneous mixing of the inorganic and organic components, so as to achieve the desired interpenetration of the inorganic and organic polymer networks in the final composite material.

The degree of ageing of the sol prior to addition of the polymerisable organic species affects the properties of the resulting composite material. For instance, if, as is preferred, the polymerisable organic species are not added to the sol until hydrolysis of the inorganic monomer precursors is substantially complete, the resulting composite material will take on more of the properties of the inorganic polymer than the organic polymer. The final properties will mainly be determined by the loading level of the inorganic phase and the inherent nature of the inorganic and organic components. Completion of hydrolysis of the inorganic monomer precursors may be determined, for instance, by any technique capable of detecting the presence of free water in the system, for example NMR, and FTIR.

Typically, the sol will be allowed to age for several hours before adding the polymerisable organic species, e.g. for at least twelve hours, or for a day or several days, depending upon the properties required in the resulting composite material. However, as inorganic polymerisation may continue for months, or even years, the sol can be allowed to age for considerably longer periods of time. Ageing of the sol may be achieved, or accelerated, by heating, typically to a temperature of 30° to 100°C, as mentioned above.

As mentioned above, in order to achieve the desired intimate level of mixing of inorganic and organic polymer networks in the final coating, it is necessary that the inorganic and organic polymerisable species are homogeneously mixed prior to formation of the final inorganic polymer, or gel. Accordingly, it is preferred that the polymerisable organic species are either liquid at room temperature, approximately 25°C, or they are solid polymerisable organic species dissolved in an organic solvent which is compatible with the overall sol-gel process.

The nature of the polymerisable organic species is selected according to the properties required in the final coating. Typically, the polymerisable organic species will be selected to provide strength and abrasion-resistance and, where desired, transparency. Furthermore, if chemical resistance is required in the final coating, for instance resistance to swelling or other damage on contact with a solvent, it is desirable to employ polymerisable organic species capable of forming two-dimensional or three-dimensional, i.e. cross-linked, polymer networks. Such polymerisable organic species may be considered as having difunctional or trifunctional reactivity, in that they possess two or more reactive sites available for polymerisation.

It is essential, however, that the polymerisable organic species be selected such that on drying of the coating, including removal of any volatile components, and subsequent curing of the coating, substantially no organic material is lost from the coating composition, as this may reduce the compatibility of the inorganic and organic phases, ultimately making the composition difficult or impossible to coat, and/or resulting in poor properties, e.g. cracking. For instance, loss of polymerisable organic species in an amount of as little as 3% by weight of the total coating composition may have drastic consequences.

Preferably, the polymerisable organic species used are those which, upon polymerisation, form thermosetting polymers. Examples of suitable polymerisable organic species include carbonates, esters such as terephthalates, urethanes, and other difunctional or trifunctional monomers such as some urethane acrylates, and mixtures thereof. Urethane precursors, such as isocyanates or diisocyanates and polyols, and urethane acrylates are particularly preferred. Organometallic monomers may also be used, but in this case they will not contain hydrolysable bonds.

Preferably, the polymerisable organic species polymerise at relatively low temperature, e.g. lower than 150°C, after addition of a suitable initiator, or by irradiation, e.g. with UV or IR light, or bombardment with X-rays or electron beams, so as to be applicable as coatings for thermoplastic materials or thermosetting materials having low melting points. Polymerisable organic species which give rise to polymers which have good resistance to organic solvents are also preferred. In the case of the carbonates, therefore, aliphatic carbonates as opposed to aromatic carbonates are preferred.

Depending upon the nature of the inorganic monomers and the polymerisable organic species it may be desirable to include further organic solvent prior to substantial inorganic polymerisation, so as to enhance miscibility of the inorganic and organic components. Surprisingly, subsequent removal of this solvent, together with other volatile components, e.g. those produced in the polycondensation reaction, does not result in deleterious effects in the final product, i.e. cracking.

Typically, organic polymerisation is initiated before inorganic polymerisation is substantially complete and a gel has been formed. In some cases, however, it may be desirable to delay organic polymerisation until after formation of a gel.

Polymerisation of the polymerisable organic species may be initiated in any conventional manner, which will be determined by the nature of the polymerisable organic species. It will normally involve the use of a polymerisation initiator. If a chemical polymerisation initiator is used, preferably this is added only after substantial inorganic polymerisation has occurred, so as to prevent premature organic polymerisation, prior to formation of an inorganic gel network. Otherwise, the polymerisation initiator may be added in an inactive state, for activation only when substantial inorganic polymerisation has occurred.

Other, preferred, options are to employ polymerisable organic species which are radiation-curable, for instance species curable by UV- or IR-radiation, or by bombardment with electron beams or X-rays, or which cure on heat treatment. Examples of UV-curable materials include urethanes.

For ease of application, substantial organic polymerisation is usually delayed until after coating on to a substrate. Therefore, if heat is used to initiate or accelerate organic polymerisation, the temperature should be selected so as not to have any deleterious effect on the substrate to which the coating is to be applied. In the case of thermoplastic or thermosetting substrates, relatively low temperatures should be used, typically lower than 150°C, and more typically in the range 30 to 80°C. Where a chemical polymerisation initiator is used, this may mean delaying addition of this until just prior to, or possibly during, the coating operation.

If desired, a protective cover sheet may be used to exclude oxygen which may interfere with the organic polymerisation reaction, and which may have a deleterious effect on the resulting coating.

Prior to completion of inorganic polymerisation, preferably at least some solvent, and more preferably substantially all solvent is removed, together with any volatile components produced during the hydrolysis and polycondensation reactions. By volatile components typically we mean components boiling at or lower than about 100°C, including water and other polar or protic solvents. Removal of solvent is important to avoid potential separation of the inorganic and organic components in the final composite material. Conventional methods for the removal of solvent, including any other volatile components, may be employed, e.g. evaporation techniques.

Solvent removal may take place in a number of steps. For instance, some solvent may be removed after ageing of the inorganic sol and prior to addition of the organic monomers, and/or solvent may be removed prior to initiating organic polymerisation and/or formation of the final composite material.

The relative proportions of inorganic monomer precursors and polymerisable organic species used in the process of the invention are selected according to the properties desired in the final composite material. Typically, the amount of polymerisable organic species used will be in the range from 1% to 99%, preferably 5% to 50%, more preferably 5 to 25%, by weight based upon the total amount of polymerisable inorganic and organic species present prior to inorganic polymerisation. For instance, when hardness is the primary aim, the coating material will typically comprise at least 50% by weight, and more typically at least 80% by weight, of inorganic material. Where, however, flexibility with good hardness is the primary aim, or other properties typically associated with the organic polymer component of the coating material, the polymerisable organic species should be present in an amount of greater than 50% by weight, and typically at least 60% by weight of the coating material.

The proportions of the inorganic monomer precursors and polymerisable organic species necessary to give rise to a particular inorganic, or organic, loading can be calculated relatively simply from a knowledge of the reactions taking place in the sol-gel process. For instance, for any desired inorganic loading level, the oxide content of the sol is first calculated, excluding any contribution from alcohols produced during the course of the polycondensation reaction. In other words, it is necessary to calculate the oxide content of the sol which will potentially solidify to form the inorganic polymer. The amount of organic monomers used in the process can then be adjusted according to the proportion required in the final composite material.

The properties of the coating material of the present invention may further be adjusted according to its desired application, for instance through the use of inorganic monomers containing different inorganic elements. For example, it is known that titanium is capable of absorbing light in the UV range of the spectrum. Accordingly, by including a titanium network-forming species within the process of the present invention coating materials may be prepared which are resistant to UV degradation. The titanium network-forming species will typically be combined with another inorganic network-forming species, either in the form of a single molecule, e.g. a mixed silica-titania alkoxide, or in separate molecules, for instance separate alkoxides, e.g. an alkoxysilane and an alkoxytitanate. Such materials find particular use as external coatings for a variety of articles to avoid the weathering effects of the sun, for instance in coating building materials and headlamp clusters in automobiles.

The properties of the composite material of the present invention may further be adjusted through the use of additives conventional in the art. For example, fluorine-containing reagents may be added to the composite material to improve its hydrophobicity. Alternatively, reagents may be added to confer hydrophillic characteristics. Dyes and pigments may be added for tinting, for example to prepare paints. UV-screening compounds may be incorporated into coatings for windscreens and spectacle lenses for eye-protection, and other substrates susceptible to UV degradation. Photochromic and electrochromic compounds may be incorporated into the coatings for application to lenses or other articles to provide visual effects. Corrosion-resistant materials may be incorporated into coating materials for use on metals.

Furthermore, the hardness of the coating material of the present invention may be increased by adding other ceramic materials, for instance those conventionally used as fillers, such as silica, silicon carbide, and alumina. Generally, however, such ceramic materials have particle diameters greater than 300 to 400 nm, and will therefore interfere with visible light transmission by the composite material, resulting in a loss in transparency. Coating materials modified in this manner may therefore be valued more for properties such as hardness, solvent resistance and adhesive strengths than for their transparency.

The coating material may be applied to a substrate by any conventional means, for example dipping, spraying, roll coating or brushing. For practical purposes, and as mentioned above, it is preferred to apply the composite material to a substrate prior to completion of polymerisation of the inorganic and organic monomers. Otherwise, the composite material may be too rigid to apply evenly. In fact, it is most preferred to apply the composite material to a substrate prior to start of polymerisation of the organic monomers, using a fluid composition comprising an inorganic sol obtainable by hydrolysis of different hydrolysable inorganic monomer precursors, and, mixed therewith, organic monomers, as per the third and fourth aspects of the present invention.

Due to its high internal strength, the relatively high coating thicknesses, for instance up to 1 mm, or higher, may be used. However, generally, coating thickness of up to 100 µm, typically 5 to 100 µm, will be used.

Ideally, the coating material is selected to be compatible with the substrate that it is to coat. However, in this case, care should be taken that the polymerisation initiator system used does not cause degradation of the substrate itself. Furthermore, depending on the nature of the inorganic monomer used, and in particular if these are alkoxysilanes as is preferred, it is not necessary to apply a primer to the substrate prior to coating.

The coating material of the present invention may be applied to a wide variety of substrates. As the coating material may be formulated to have a relatively low polymerising, or curing, temperature it is particularly suitable for coating polymeric materials having relatively low melting points, for example of 150°C or lower. Examples of such polymeric materials include thermoplastic materials and thermosetting materials such as polycarbonates, polyesters such as polyacrylates and polyterephthalates, polyurethanes, and polyacrylics. The enhanced scratch/abrasion and chemical resistance imparted to these materials by way of the coatings of the present invention allows them to be considerably more widely utilised than they are at present.

The coating material may also be used to coat substrates selected from metals, ceramic materials, and natural materials such as leather and wood, or synthetic substitutes for these materials.

The coating material may also be formulated to be transparent, and is therefore ideal for coating transparent substrates, or patterned or decorated substrates, e.g. painted substrates.

The coating material may be applied as a single coating, or as a number of coatings, optionally with different inorganic loadings. Additionally, the coating material may be applied to substrates which have already been protected by way of one of the commercially-available silicone hardcoats or another protective or other coating.

More specifically, when the coating material is transparent it may be used as a coating for glass, or hitherto known glass substitutes. For example, it may be used to coat building or vehicle, windows and windscreens, e.g. for automobile, aircraft and trains, spectacle lenses, camera lenses, protective visors, optical filters and light casings, e.g. headlamp clusters, compact discs, display screens, e.g. in personal computers and mobile phones. The coating material may also be used to protect white goods, e.g. refrigerators and washing machines, and brown goods e.g. audiovisual equipment.

In particular, the pre-coated substrate is defined in claims 14 to 15.

The composite material of the present invention may also be employed as an adhesive, or bonding agent, or a sealant, particularly for polymeric materials, especially plastics, which do not normally adhere very well to each other, but also for glasses, other ceramics, and metals. This is because the composite material of the present invention tends to have high affinity to a wide variety of substrates.

When it is to be used as an adhesive or sealant, typically a precursor to the composite material of the present invention, which is at an intermediate stage of polymerisation, will be coated on to one or more of the surfaces to be bonded or sealed together, and the surfaces to be bonded will then be brought into contact with one another. Then, on completion of polymerisation, a secure bond is formed. The composite material of the present invention is particularly suited for use as an adhesive when polymerisation of the inorganic and organic components takes place relatively quickly, resulting in a fast-setting adhesive layer. One could also envisage the present invention in the form of a two-component adhesive, one component comprising an inorganic sol and the other organic monomers/oligomers, for intimate mixing, then curing, or polymerisation.

The composite material may also be used as an insulator in multilayer printed circuit boards, by applying as a coating to elements thereof and then curing. Materials of this type may be formulated to have relatively uniform coefficients of thermal expansion (CTE's) in at least the x- and y-planes, leading to registration accuracy in the formation of multilayer circuit boards.

The following examples further illustrate the present invention.

### Example 1

A sol was prepared as follows:
Component A: 41.7 g tetraethoxysilane (TEOS) was placed in a beaker, and an intimate mixture of 36.8 g methanol and 7.21 g water was added thereto.
Component B: 30.0 g 3-(trimethoxysilyl)propylmethacrylate (MTPMA) was placed in a beaker, and an intimate mixture of 22.2 g methanol and 3.26 g water was added thereto.

Components A and B were then stirred, separately, in sealed beakers for about 30 minutes, after which they were combined, and stirred for about 30 minutes, again in a sealed beaker.

The resulting sol was then aged by heating at 80°C for about 24 hours to promote formation of the inorganic network. 100 g of the aged sol was then mixed with 28.3 g of UV-curable aliphatic urethane acrylate monomer sold by Akcros Chemicals under product code 210TP30, and 1.4 g of Irgacure® 500 (supplied by CIBA Speciality Chemicals) as polymerisation initiator. The resulting mixture was then subjected to evaporation to remove any residual methanol, any alcohol produced during the polycondensation reaction, and residual volatiles.

The liquid remaining after evaporation was then coated on to an acrylic substrate at a thickness of 50 µm. The coated substrate was then heated at 40°C for one hour in an air oven, to enhance formation of the inorganic polymer network. The coated substrate was then irradiated for five minutes under a UV light having a power rating of 43.6 mW/cm², to cure the organic monomer and yield the final composite material. This composite material had a 50% by weight ceramic loading, by virtue of the proportions of the inorganic monomer and organic monomer utilised in its preparation.

### Examples 2 and 3

Example 1 was repeated adjusting the amount of organic monomer to achieve inorganic loadings of 25% by weight (Example 2) and 75% by weight (Example 3). The 75% by weight loaded material was coated on to a polycarbonate substrate rather than an acrylic substrate.

### Examples 4 and 5

Example 1 was repeated substituting the organic monomer with a further UV-curable aliphatic urethane acrylate monomer, sold by Akcros Chemicals under product code 260GP25, in appropriate amounts to achieve inorganic loading of 25% (Example 4) and 50% by weight (Example 5). In Example 5, the inorganic sol was aged by heating at 80°C for 5 days, rather than for 24 hours.

The hardness of the coated materials was measured using a scuff test.

### Scuff Test

The scuff test is an in-house method for scouring samples. Two pieces of Scotchbrite® abrasive mat are secured to a metal plate and this arrangement is placed on the bit of a standard upright drill. The samples are fixed at a distance of 70 mm from the drill bit, the Scotchbrite material is rotated at 500 rpm, and contacts the sample over a distance of approximately 60 mm. The samples are scuffed for 10 second bursts, and examined until the first signs of abrasion are observed. The time taken for this is the measure of scuff resistance.

Coated substrates made in accordance with Examples 1, 3 and 5 were evaluated by the scuff test, and compared with substrates coated with a number of commercially-available silicone hardcoats. The commercially-available silicone hardcoats are available from GE Bayer, and are marketed as: PHC587 - primerless, weatherable grade coating; AS4000 - premium performance, abrasion resistant, weatherable hardcoat; and SHC1200 - optical grade abrasion resistant hardcoat. These were coated onto polycarbonate substrates at thicknesses of between 5 and 10 µm.

The results are summarised in Table 1 below.

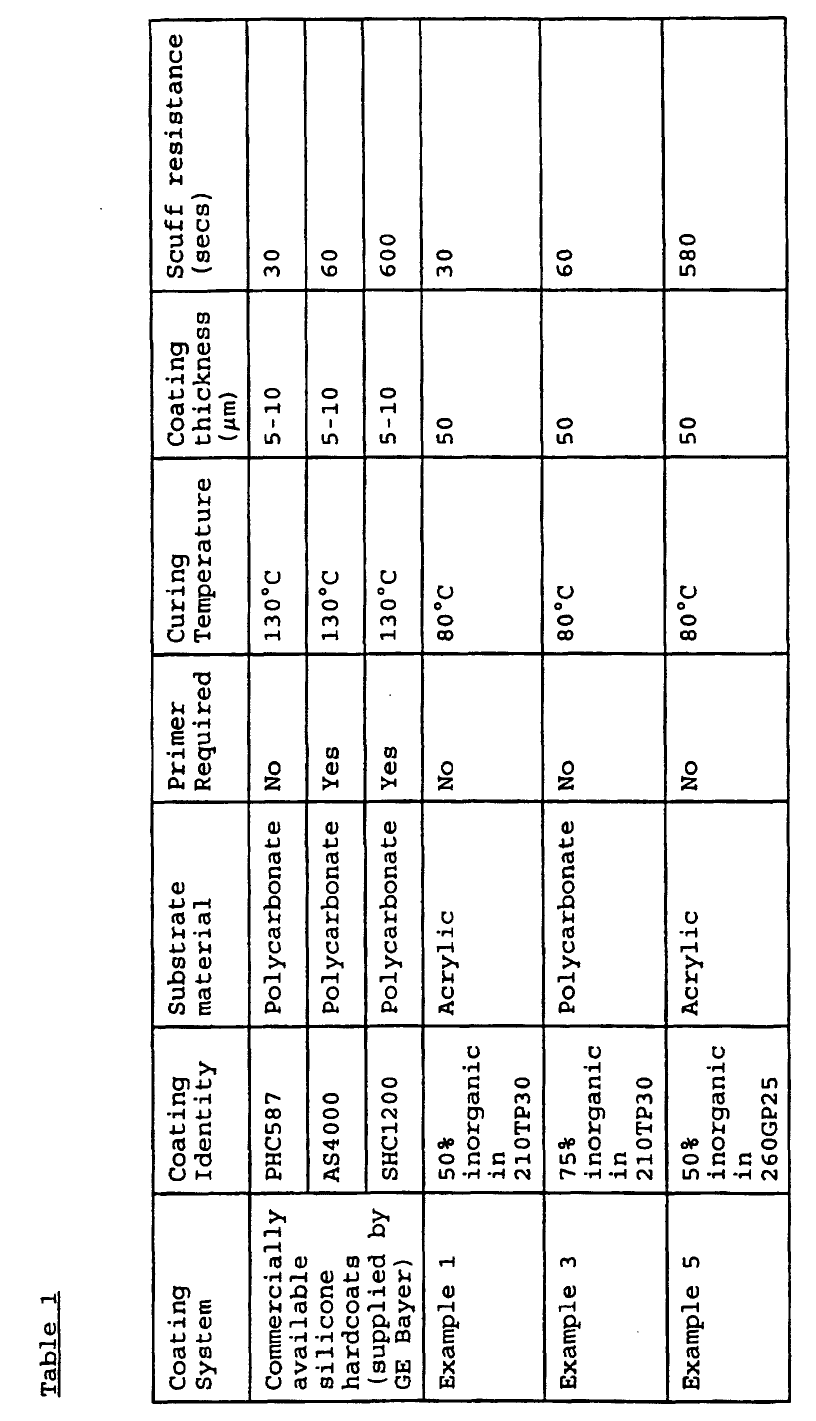

The results illustrate that the coatings of the invention have similar hardness to, or better hardness than, the PHC587 and AS4000 silicone hardcoats. While the coatings of the invention are not as hard as the SHC1200 silicone hardcoat, by varying the molar ratio of the inorganic network-forming species coatings can be achieved having superior hardness to this material and which are clear and uncracked, as illustrated below.

Furthermore, there are drawbacks associated with the use of the commercially-available silicone hardcoats which are not experienced with the coatings of the present invention. For instance, the commercially-available silicone hardcoats cannot be properly hardened when deposited on acrylic substrates, since they require a curing temperature of around 130°C, which causes acrylic substrates to deform. Furthermore, they can only be coated to thicknesses of up to 10 µm, otherwise cracking occurs. Furthermore, of the three commercially-available silicone hardcoats tested, only PHC587 can be used without first applying a primer coating. In contrast, the coatings according to the present invention do not need a primer.

### Example 6

A sol was prepared as follows:
Component A:
   250.2 g of tetraethyoxysilane (TEOS) was placed in a beaker, and an intimate mixture of 221.0 g methanol and 43.24 g of distilled water and 0.5 g 36% hydrochloric acid was added thereto.
Component B:
   60 g of 3-(trimethoxysilyl)propylmethadrylate (MPTMA) was placed in a beaker, and an intimate mixture of 44.5 g methanol, 6.52 g distilled water and 0.2 g 36% hydrochloric acid was added thereto.

The ratio of silanes in Component A: total silanes in Components A and B was 0.833, as compared to 0.624 in Example 1.

Components A and B were then stirred, separately, in sealed beakers for approximately 30 minutes, after which they were combined, and stirred for about 30 minutes, again in a sealed beaker.

The resulting sol was then aged at room temperature for about 24 hours in a sealed container to allow the development of the inorganic network. This solution was then mixed with 1.75 g of UV-curable aliphatic urethane acrylate monomer sold by Akcros chemicals under product code 260GP25, and 0.1 g of a mixture of 50 % 1-hydroxycyclohexylphenylketone: 50 % benzophenone as photoinitiator. The resulting solution was stored in a sealed container and kept in a darkened storage cabinet.

When required the solution was deposited as a coating onto a polycarbonate substrate, the volatiles allowed to "flash-off" at room temperature and the coating subjected to UV radiation from a UV light with a power rating of 43.6 mW/cm² to cure the organic component. The coating had an organic network content of 5% by weight.

### Examples 7 to 13

Example 6 was repeated adjusting the amount of the organic component to achieve different inorganic loadings as shown in Tables 2 and 3 below.

Polycarbonate plaques were coated with the solutions obtained and subjected to various heat treatments and UV-curing. The cured samples were then evaluated for their abrasion resistance using a Taber Abrader with CS10F abrasive wheels and a 500 g applied load. The increase in haze was measured using a method similar to ASTM D1044 (but using a different aperture size).

Control samples of commercially-available silicone hardcoats were subject to the same thermal schedule and abrasion testing procedure.

**Table 2 -**

| 130°C soak for 60 minutes - 300 Taber cycles | | | |
|---|---|---|---|
| Example No. | Ceramic loading (wt%) | Increase in Haze (%) | Std.Dev |
| 7 | 25 | 24.326 | 1.007 |
| 8 | 50 | 20.147 | 0.645 |
| 9 | 75 | 11.647 | 0.191 |
| 10 | 80 | 2.353 | 0.065 |
| 11 | 90 | 2.002 | 0.364 |
| 12 | 92 | 2.143 | 0.172 |
| 13 | 95 | 1.774 | 0.347 |
| Comparative | PHC 587 | 6.475 | 0.095 |
| Comparative | SHC 1200 | 4.105 | 0.365 |
| Comparative | AS 4000 | 3.994 | 0.114 |

**Table 3 -**

| 80°C soak for 60 minutes - 300 Taber cycles | | | |
|---|---|---|---|
| Example No. | Ceramic loading (wt%) | Increase in Haze (%) | Std. Dev |
| 7 | 25 | 34.853 | 0.715 |
| 8 | 50 | 28.073 | 0.589 |
| 9 | 75 | 16.897 | 0.285 |
| 10 | so | 6.228 | 0.082 |
| 11 | 90 | 4.207 | 0.203 |
| 12 | 92 | 3.793 | 0.145 |
| 13 | 95 | 2.775 | 0.313 |
| Comparative | PHC 587 | 18.627 | 0.215 |
| Comparative | SHC 1200 | 7.466 | 0.454 |
| Comparative | AS 4000 | 18.182 | 0.086 |

**Table 4 -**

| Function of heat soaking conditions and Taber cycles on abrasion performance of 95 wt% inorganic ceramic loaded coating (the final sample in the table below was not subjected to a heat soak prior to UV curing). | | | | |
|---|---|---|---|---|
| Soak Temperature (°C) | Soak time (mins) | Taber cycles | Increase in Haze (%) | Std. Dev |
| 130 | 60 | 100 | 1.319 | 0.190 |
| 130 | 60 | 200 | 1.339 | 0.050 |
| 130 | 60 | 300 | 1.760 | 0.030 |
| 130 | 60 | 500 | 2.866 | 0.240 |
| 130 | 30 | 500 | 2.187 | 0.039 |
| 80 | 30 | 500 | 2.665 | 0.176 |
| - | - | 500 | 1.781 | 0.105 |

As can be seen from these results, increasing the inorganic (or ceramic) loading level in a given base resin increases the hardness of the resultant coating beyond that of the commercially-available silicone hardcoats. As a general rule, as the amount of inorganic in the composite coating increases so does the hardness. Furthermore, as a result of the higher ratio of inorganic network-forming species, the coatings obtained were harder than those obtained at the corresponding inorganic loadings used in Examples 4 and 5, in addition to being clear and uncracked.

These results also illustrate that, generally, greater hardness is achieved with higher curing temperature. Although the results reported in Table 4 illustrate that, with a UV curing organic component, exposing the deposited coating to the atmosphere for a period of time (even at elevated temperature) before curing the organic phase causes a reduction in the uniformity of the coating. The longer the sample is exposed before curing, the more likely cracks are to appear after curing, and possibly even some delamination of the coating may occur. Although abrasion resistance is not significantly reduced where the coating remains attached, as long as the underlying substrate is not exposed to abrasion.

### Example 14

A sol was prepared as follows:
Component A:
   33.4 g of tetraethoxysilane (TEOS) was placed in a beaker, and an intimate mixture of 32.4 g methanol, 2.9 g of distilled water and 0.2 g of 36% hydrochloric acid was added thereto. After 1 hour of mixing, 4.5 g of titanium isopropoxide was added. This solution was then mixed for at least 12 hours and then a further 2.9 g of distilled water was added. The solution was stirred for 1 hour and then a further 0.57 g of distilled water was added.
Component B:
   8.0 g of 3- (trimethoxysilyl) propylmethacrylate (MPTMA) was placed in a beaker, and an intimate mixture of 5.9 g methanol, and 0.87 g distilled water and 0.2 g of 36% hydrochloric acid was added thereto.

Components A and B were then stirred, separately, in sealed beakers for approximately 30 minutes, after which they were combined, and stirred for about 30 minutes, again in a sealed beaker.

The resulting sol was then aged at room temperature for at least 24 hours in a sealed container to allow the development of the inorganic network. 7.2 g of distilled water was then slowly added to the solution. 90.0 g of this solution was then mixed with 0.8 g of UV-curable aliphatic urethane acrylate monomer sold by Akcros chemicals under product code 260GP25, and 0.1 g of a mixture of 50% 1-hydroxycyclohexylphenylketone: 50% benzophenone as photoinitiator. The resulting solution was stored in a sealed container and kept in a darkened storage cabinet.

When required the solution was deposited as a coating on to a polycarbonate substrate, the volatiles allowed to "flash-off" at room temperature and the coating subjected to UV radiation using a UV light with a power rating of 43.6 mW/cm² to cure the organic component. The coating had an organic network content of 5% (by weight).

## Claims

1. A process for providing a protective coating on a substrate comprising
(1) applying to the substrate a coating composition comprising an homogeneous mixture comprising an inorganic sol and polymerisable organic species wherein the inorganic sol is obtainable by hydrolysing different hydrolysable inorganic monomer precursors separately from one another to form different sols, and mixing the different sols to form inorganic monomers, the different hydrolysable inorganic monomer precursors comprising first and second hydrolysable inorganic monomer precursors, the first hydrolysable inorganic monomer precursors having at least two hydrolysable groups, and the second hydrolysable inorganic monomer precursors having at least one non-hydrolysable group;
(2) polymerising the polymerisable organic species; and
(3) polymerising the inorganic monomers, wherein polymerisation of the organic species is initiated prior to completion of polymerisation of the inorganic monomers, to form a solid coating on the substrate.

2. A process according to claim 1, wherein hydrolysis of the hydrolysable monomer precursors takes place in the presence of a mineral acid.

3. A process according to claim 1 or claim 2, wherein the hydrolysable inorganic monomer precursors are alkoxides.

4. A process according to claim 3, wherein the hydrolysable monomer precursors are alkoxysilanes.

5. A process according to any preceding claim, wherein the molar ratio of the first hydrolysable monomer precursors: total of first and second hydrolysable monomer precursors is in the range 0.75 to 0.9 and the coating comprises at least 50% by weight inorganic monomers.

6. A process according to claim 5, wherein the molar ratio of first hydrolysable monomer precursors: total of first and second hydrolysable monomer precursors is in the range 0.78 to 0.88.

7. A process according to any preceding claims, wherein the first hydrolysable monomer precursors comprise a tetraalkoxysilane and the second hydrolysable monomer precursors comprise an alkoxysilane having at least one ethylenically-unsaturated group and/or an epoxy group.

8. A process according to claim 7, wherein the first hydrolysable inorganic monomer precursors comprise tetraethoxysilane and the second hydrolysable precursors comprise 3-(trimethoxysilyl)propylmethacrylate.

9. A process according to any preceding claim, wherein the sol is aged prior to mixing with the polymerisable organic species.

10. A process according to any preceding claim, wherein the polymerisable organic monomers are added to the sol in liquid or solution form.

11. A process according to any preceding claim, wherein the polymerisable organic species are polymerisable to form a thermosetting material.

12. A process according to claim 11, wherein the polymerisable organic species are selected from carbonates, urethanes, urethane precursors, urethane acrylates and terephthalates.

13. A process according to claim 12, wherein the polymerisable organic species are selected from isocyanates, diisocyanates and polyols.

14. A process according to any preceding claim, wherein the substrate is selected from thermoplastic materials, thermosetting materials, metals, ceramic materials, natural materials, or any of these materials which are pre-coated.

15. A process according to claim 14, wherein the substrate is pre-coated with a decorative finish.

16. A process according to claim 14 or claim 15, wherein the substrate comprises a polycarbonate or a polyacrylic material.

17. A coated substrate obtainable by a process according to any preceding claim.

18. A coated substrate according to claim 17, wherein the coating is transparent.

19. A coating composition comprising an homogenous mixture comprising an inorganic sol and polymerisable organic species, wherein the inorganic sol is obtainable by hydrolysing first and second hydrolysable monomer precursors separately from one another to form a first sol and a second sol, and mixing the first and second sols to form inorganic monomers, the first hydrolysable inorganic monomer precursors being different to the second hydrolysable inorganic monomer precursors and having at least two hydrolysable groups, and the second hydrolysable inorganic monomer precursors having at least one non-hydrolysable group.

20. A process for bonding together at least two articles comprising applying to the surface of one or each article a composition as defined in claim 19, bringing the surfaces to be bonded into contact with one another, and then curing the composition, to form a secure bond.

## Patentansprüche

1. Verfahren zur Bereitstellung einer Schutzschicht auf einem Substrat, umfassend
(1) Aufbringen einer Beschichtungszusammensetzung umfassend eine homogene Mischung umfassend ein anorganisches Sol und polymerisierbare organische Spezies auf das Substrat, wobei das anorganische Sol dadurch erhältlich ist, dass man verschiedene hydrolysierbare anorganische Monomervorstufen getrennt voneinander hydrolysiert, um verschiedene Sole zu bilden, und die verschiedenen Sole mischt, um anorganische Monomere zu bilden, wobei die verschiedenen hydrolysierbaren anorganischen Monomervorstufen erste und zweite hydrolysierbare anorganische Monomervorstufen umfassen, die ersten hydrolysierbaren anorganischen Monomervorstufen mindestens zwei hydrolysierbare Gruppen aufweisen und die zweiten hydrolysierbaren anorganischen Monomervorstufen mindestens eine nicht hydrolysierbare Gruppe aufweisen,
(2) Polymerisieren der polymerisierbaren organischen Spezies und
(3) Polymerisieren der anorganischen Monomere, wobei die Polymerisation der organischen Spezies vor Vervollständigung der Polymerisation der anorganischen Monomere gestartet wird, um eine feste Beschichtung auf dem Substrat zu bilden.

2. Verfahren nach Anspruch 1, wobei die Hydrolyse der hydrolysierbaren Monomervorstufen in Anwesenheit einer Mineralsäure stattfindet.

3. Verfahren nach Anspruch 1 oder Anspruch 2, wobei die hydrolysierbaren anorganischen Monomervorstufen Alkoxide sind.

4. Verfahren nach Anspruch 3, wobei die hydrolysierbaren Monomervorstufen Alkoxysilane sind.

5. Verfahren nach irgendeinem vorhergehenden Anspruch, wobei das Molverhältnis von ersten hydrolysierbaren Monomervorstufen : Gesamtheit von ersten und zweiten hydrolysierbaren Monomervorstufen im Bereich von 0,75 bis 0,9 liegt und die Beschichtung mindestens 50 Gew.-% anorganische Monomere umfasst.

6. Verfahren nach Anspruch 5, wobei das Molverhältnis von ersten hydrolysierbaren Monomervorstufen : Gesamtheit von ersten und zweiten hydrolysierbaren Monomervorstufen im Bereich von 0,78 bis 0,88 liegt.

7. Verfahren nach irgendeinem der vorhergehenden Ansprüche, wobei die ersten hydrolysierbaren Monomervorstufen ein Tetraalkoxysilan umfassen und die zweiten hydrolysierbaren Monomervorstufen ein Alkoxysilan mit mindestens einer ethylenisch ungesättigten Gruppe und/oder einer Epoxygruppe umfassen.

8. Verfahren nach Anspruch 7, wobei die ersten hydrolysierbaren anorganischen Monomervorstufen Tetraethoxysilan umfassen und die zweiten hydrolysierbaren Vorstufen 3-(Trimethoxysilyl)propylmethacrylat umfassen.

9. Verfahren nach irgendeinem vorhergehenden Anspruch, wobei das Sol vor dem Mischen mit den polymerisierbaren organischen Spezies gealtert wird.

10. Verfahren nach irgendeinem vorhergehenden Anspruch, wobei die polymerisierbaren organischen Monomere in flüssiger oder Lösungsform zum Sol gegeben werden.

11. Verfahren nach irgendeinem vorhergehenden Anspruch, wobei die polymerisierbaren organischen Spezies polymerisierbar sind, um ein wärmehärtbares Material zu bilden.

12. Verfahren nach Anspruch 11, wobei die polymerisierbaren organischen Spezies aus Carbonaten, Urethanen, Urethanvorstufen, Urethanacrylaten und Terephthalaten ausgewählt werden.

13. Verfahren nach Anspruch 12, wobei die polymerisierbaren organischen Spezies aus Isocyanaten, Diisocyanaten und Polyolen ausgewählt werden.

14. Verfahren nach irgendeinem vorhergehenden Anspruch, wobei das Substrat aus thermoplastischen Materialien, wärmehärtbaren Materialien, Metallen, Keramikmaterialien, natürlichen Materialien oder irgendeinem dieser Materialien, die vorbeschichtet sind, ausgewählt wird.

15. Verfahren nach Anspruch 14, wobei das Substrat mit einer Dekorüberzug vorbeschichtet ist.

16. Verfahren nach Anspruch 14 oder Anspruch 15, wobei das Substrat ein Polycarbonat- oder ein Polyacrylmaterial umfasst.

17. Beschichtetes Substrat, erhältlich durch ein Verfahren nach irgendeinem vorhergehenden Anspruch.

18. Beschichtetes Substrat nach Anspruch 17, wobei die Beschichtung transparent ist.

19. Beschichtungszusammensetzung, umfassend eine homogene Mischung umfassend ein anorganisches Sol und polymerisierbare organische Spezies, wobei das anorganische Sol erhältlich ist durch voneinander getrenntes Hydrolysieren von ersten und zweiten hydrolysierbaren Monomervorstufen, um ein erstes Sol und ein zweites Sol zu bilden, und Mischen des ersten und zweiten Sols, um anorganische Monomere zu bilden, wobei die ersten hydrolysierbaren anorganischen Monomervorstufen von den zweiten hydrolysierbaren anorganischen Monomervorstufen verschieden sind und mindestens zwei hydrolysierbare Gruppen aufweisen und die zweiten hydrolysierbaren anorganischen Monomervorstufen mindestens eine nicht hydrolysierbare Gruppe aufweisen.

20. Verfahren zum Miteinanderverbinden von mindestens zwei Gegenständen, umfassend das Aufbringen einer Zusammensetzung wie in Anspruch 19 definiert auf die Oberfläche von einem oder von jedem Gegenstand, das Inkontaktbringen der zu verbindenden Oberflächen und dann das Härten der Zusammensetzung, um eine feste Bindung zu bilden.

## Revendications

1. Procédé pour pourvoir un substrat d'un revêtement protecteur, comprenant
(1) l'application sur le substrat d'une composition de revêtement comprenant un mélange homogène comprenant un sol inorganique et des espèces organiques polymérisables, dans laquelle le sol inorganique peut être obtenu en hydrolysant différents précurseurs de monomères inorganiques hydrolysables, séparément les uns des autres, pour former différents sols, et en mélangeant les différents sols pour former des monomères inorganiques, les différents précurseurs de monomères inorganiques hydrolysables comprenant des premiers et seconds précurseurs de monomères inorganiques hydrolysables, les premiers précurseurs de monomères inorganiques hydrolysables ayant au moins deux groupes hydrolysables, et les seconds précurseurs de monomères inorganiques hydrolysables ayant au moins un groupe non-hydrolysable ;
(2) la polymérisation des espèces organiques polymérisables ; et
(3) la polymérisation des monomères inorganiques, la polymérisation des espèces organiques étant amorcée avant la fin de la polymérisation des monomères inorganiques, pour former un revêtement solide sur le substrat.

2. Procédé selon la revendication 1, dans lequel une hydrolyse des précurseurs de monomères hydrolysables a lieu en présence d'un acide minéral.

3. Procédé selon la revendication 1 ou 2, dans lequel les précurseurs de monomères inorganiques hydrolysables sont des alcoxydes.

4. Procédé selon la revendication 3, dans lequel les précurseurs monomères hydrolysables sont des alcoxysilanes.

5. Procédé selon l'une quelconque des revendications précédentes, dans lequel le rapport molaire premiers précurseurs de monomères hydrolysables:total des premiers et seconds précurseurs de monomères hydrolysables est dans la plage de 0,75 à 0,9, et le revêtement comprend au moins 50 % en poids de monomères inorganiques.

6. Procédé selon la revendication 5, dans lequel le rapport molaire premiers précurseurs de monomères hydrolysables:total des premiers et seconds précurseurs de monomères hydrolysables est dans la plage de 0,78 à 0,88.

7. Procédé selon l'une quelconque des revendications précédentes, dans lequel les premiers précurseurs de monomères hydrolysables comprennent un tétraalcoxysilane, et les seconds précurseurs de monomères hydrolysables comprennent un alcoxysilane ayant au moins un groupe éthyléniquement insaturé et/ou un groupe époxy.

8. Procédé selon la revendication 7, dans lequel les premiers précurseurs de monomères inorganiques hydrolysables comprennent du tétraéthoxysilane, et les seconds précurseurs hydrolysables comprennent du méthacrylate de 3-(triméthoxysilyl)propyle.

9. Procédé selon l'une quelconque des revendications précédentes, dans lequel le sol est vieilli avant d'être mélangé avec les espèces organiques polymérisables.

10. Procédé selon l'une quelconque des revendications précédentes, dans lequel les monomères organiques polymérisables sont ajoutés au sol sous forme liquide ou en solution.

11. Procédé selon l'une quelconque des revendications précédentes, dans lequel les espèces organiques polymérisables sont polymérisables pour former un matériau thermodurcissable.

12. Procédé selon la revendication 11, dans lequel les espèces organiques polymérisables sont choisies parmi des carbonates, uréthannes, précurseurs d'uréthannes, acrylates d'uréthanne et téréphtalates.

13. Procédé selon la revendication 12, dans lequel les espèces organiques polymérisables sont choisies parmi des isocyanates, diisocyanates et polyols.

14. Procédé selon l'une quelconque des revendications précédentes, dans lequel le substrat est choisi parmi des matériaux thermoplastiques, des matériaux thermodurcissables, des métaux, des céramiques, des matériaux naturels, et l'un quelconque de ces matériaux qui sont pré-revêtus.

15. Procédé selon la revendication 14, dans lequel le substrat est pré-revêtu avec une finition décorative.

16. Procédé selon la revendication 14 ou 15, dans lequel le substrat comprend un polycarbonate ou un matériau polyacrylique.

17. Substrat revêtu pouvant être obtenu par un procédé selon l'une quelconque des revendications précédentes.

18. Substrat revêtu selon la revendication 17, dans lequel le revêtement est transparent.

19. Composition de revêtement comprenant un mélange homogène comprenant un sol inorganique et des espèces organiques polymérisables, dans laquelle le sol inorganique peut être obtenu en hydrolysant des premiers et seconds précurseurs de monomères hydrolysables, séparément les uns des autres, pour former un premier sol et un second sol, et en mélangeant les premier et second sols pour former des monomères inorganiques, les premiers précurseurs de monomères inorganiques hydrolysables étant différents des seconds précurseurs de monomères inorganiques hydrolysables et ayant au moins deux groupes hydrolysables, et les seconds précurseurs de monomères inorganiques hydrolysables ayant au moins un groupe non-hydrolysable.

20. Procédé pour lier ensemble au moins deux objets, comprenant les opérations consistant à appliquer sur la surface d'un objet ou de chaque objet une composition telle que définie dans la revendication 19, à amener les surfaces à relier, en contact l'une avec l'autre, puis à durcir la composition pour former une liaison solide.
